Europäisches Patentamt

European Patent Office

Office européen des brevets

(11) Veröffentlichungsnummer: **0 459 490 A1**

(12) **EUROPÄISCHE PATENTANMELDUNG**

(21) Anmeldenummer: 91108877.1

(22) Anmeldetag: 30.05.91

(51) Int. Cl.⁵: **F16C 25/08**, F16C 25/06,
H02K 5/173, F16C 19/52

(30) Priorität: 31.05.90 DE 4017572

(43) Veröffentlichungstag der Anmeldung:
**04.12.91 Patentblatt 91/49**

(84) Benannte Vertragsstaaten:
**AT BE CH DE DK ES FR GB IT LI LU NL SE**

(71) Anmelder: **BAUMÜLLER NÜRNBERG GMBH**
**Ostendstrasse 80**
**W-8500 Nürnberg 30(DE)**

(72) Erfinder: **Kolb, Hermann**
Forstweg 6
**W-8500 Nürnberg 60(DE)**
Erfinder: **Meister, Rudolf**
**Waldstrasse 33**
**W-8501 Schwanstetten(DE)**

(74) Vertreter: **Patentanwälte Czowalla . Matschkur**
**+ Partner**
**Dr.-Kurt-Schumacher-Strasse 23 Postfach**
**9109**
**W-8500 Nürnberg 11(DE)**

(54) **Elektrische Maschine mit Fest-Los-Lagerung.**

(57) Elektrische Maschine, insbesondere schnellaufender, gekühlter Elektromotor mit Fest-Los-Lagerung, vor allem zum Ausgleich von Lager-Einbautoleranzen und/oder unterschiedlichen Wärmedehnungen von Läufer-Welle (1) und stationärem Ständer-
bzw. Maschinengehäuse (2), gekennzeichnet durch
ein das Loslager (4) umgebendes Zwischengehäuse
(8), das relativ zum Maschinengehäuse (2) axial verschieblich angeordnet ist.

Die Erfindung betrifft eine elektrische Maschine, insbesondere einen schnellaufenden gekühlten Elektromotor mit Fest-Los-Lagerung, die vor allem zum Ausgleich von Lager-Einbautoleranzen und/oder unterschiedlichen Wärmedehnungen der Läufer-Welle einerseits und des stationären Ständer- bzw. Maschinengehäuses andererseits dient.

Es ist bekannt, für Wellenlagerungen, insbesondere bei schnellaufenden Elektromotoren (bis zu 18 000 U/min.), sogenannte Fest-Los-Lagerungen zu verwenden. Hierbei nimmt ein Lager - das Festlager - Axialkräfte in beiden Richtungen und Radialkräfte auf, während das zweite Lager - Loslager - axial verschieblich angeordnet ist. Dadurch sollen innere Zwangskräfte, die auf die obengenannten Ursachen wie Einbautoleranzen und Wärmedehnungen zurückgeführt werden können, vermieden werden. Bei Verwendung von Wälz- bzw. Kugellagern zur Loslagerung wird die axiale Verschiebbarkeit dadurch realisiert, daß zwischen dem Außenlaufring des Wälzlagers und dem Maschinengehäuse axiales Spiel vorhanden ist. Jedoch kommt es mit dieser Anordnung besonders bei den Elektromotoren mit den obigen hohen Drehzahlen zu der Erscheinung, daß die Temperatur im Läufer wesentlich steiler als im Ständer bzw. stationären Maschinengehäuse ansteigt und sich auf den Innenlagerring des als Loslagerung ausgeführten Wälzlagers überträgt. Dabei kann sich das zum Ausgleich der inneren Zwangskräfte notwendige Spiel für dieses Wälzlager soweit verringern, daß es in seiner Funktion wesentlich beeinträchtigt wird. Hinzu kommt noch das weitere Problem des Passungsrostes: Wenn das der Loslagerung dienende Wälzlager vom Maschinengehäuse radial festgelegt oder eingeklemmt ist, kommt es bei Erwärmung der Läufer-Welle zu achsparallelen Mikrobewegungen des Außenlaufrings gegenüber der daran angepreßten Anlagefläche des Maschinengehäuses; in Verbindung mit korrosiven Einflüssen entsteht dabei Rost im Bereich der radialen Einpassung des Loslagers innerhalb des Maschinengehäuses, was die axiale Verschiebbarkeit weiter beeinträchtigt.

Es liegt daher der Erfindung die Aufgabe zugrunde, unter Bewältigung der genannten Probleme für eine elektrische Maschine ein Loslager erhöhter Betriebssicherheit und -zuverlässigkeit bei präziser Lagerung der gegebenenfalls schnellaufenden Läufer-Welle mit Verstellspiel zu schaffen. Zur Lösung wird bei einer elektrischen Maschine mit den eingangs genannten Merkmalen erfindungsgemäß ein das Loslager umgebendes Zwischengehäuse vorgeschlagen, das relativ zum Maschinengehäuse axial verschieblich angeordnet ist. Mit dieser dem Maschinengehäuse zwischengeordneten zusätzlichen Umhüllung für das Loslager wird die vor allem bei hohen Drehzahlen notwendige präzise Lagerung der Läufer-Welle und gleichzeitig das axiale Verstellspiel zum Auffangen und Puffern von Wärmedehnungen gewährleistet. Dieses Verstellspiel ist erfindungsgemäß zwischen der das Loslager umgebenden Umhüllung (Zwischengehäuse) und dem Ständer-/Maschinengehäuse realisiert.

Bei der konkreten Ausführung des Erfindungsprinzips ist es zweckmäßig, das Loslager im und relativ zum Zwischengehäuse axial festzulegen und/oder mit radialem Spiel unterzubringen. Bei der axialen Festlegung bzw. Fixierung werden Wärmeausdehnungen der Läufer-Welle in axialer Richtung unmittelbar auf das Zwischenlager übertragen und können so vom Zwischenlager-Verstellspiel innerhalb des Maschinengehäuses bzw. Ständergehäuses ausgeglichen und kompensiert werden. Die Unterbringung mit radialem Spiel trägt der Tatsache Rechnung, daß mit der Läufererwärmung eine Erwärmung des Loslagers einhergeht, woraus eine radiale Ausdehnung des Loslagers resultiert. Diese kann durch das innerhalb des Zwischengehäuses realisierte radiale Verstellspiel aufgefangen und kompensiert werden.

Als besonders geeignete Bauform für das Zwischengehäuse kommt eine Ausführung als vorzugsweise runder Hohlzylinder und/oder Ring in Betracht, welche das Loslager gegebenenfalls mit Spiel radial umgeben oder umfassen.

Wie bereits weiter oben angedeutet, sind bislang bekannte Loslager radial stramm eingepaßt, wodurch sich eine axiale Festlegung erübrigt. Dabei muß jedoch ein außerordentlicher Aufwand für die Genauigkeit der Lagerpassung und zur Verminderung von deren Einbautoleranzen in Kauf genommen werden. Zur Lösung dieses Problems wird in besonders vorteilhafter Weiterbildung der Erfindung vorgeschlagen, daß das Zwischengehäuse Fixierelemente zur axialen Festlegung des Loslagers aufweist. Dies kann bei Verwendung hohlzylindrischer bzw. ringförmiger Zwischengehäuse konkret dadurch erfolgen, daß die Fixierelemente als je an einer Stirnseite der Hohlzylinder- bzw. Ringform angeschraubte Lager-Deckel ausgeführt sind, zwischen welchen das Loslager eingeklemmt bzw. eingepaßt ist. Durch seine axiale Fixierung bzw. Festlegung wird für das Loslager eine erhöhte Einbautoleranz in radialer Richtung ermöglicht; die damit verbundenen Vorteile hinsichtlich Aufwand und Kosten liegen auf der Hand. Zudem bleibt - bei Verwendung von Wälzlagern - eine relative Aufweitung seines Innenlaufringes aufgrund thermischer Einflüsse weitgehend ohne Einfluß auf die Gebrauchsfähigkeit des Lagers insgesamt.

Zur Sicherung des Lagersystems bestehend aus Zwischengehäuse, gegebenenfalls mit zugehörigen stirnseitigen Lager-Deckeln sowie aus dem Loslager selbst liegt es im Rahmen der Erfindung, ein Verbindungselement vorzusehen, durch das das Zwischenlager und das Maschinengehäuse relativ zueinander in tangentialer Richtung des Loslagers bzw. der Läuferwelle festgelegt und/oder gegeneinander unverdrehbar gekuppelt sind. Mit anderen Worten, das Verbindungselement ist ausgelegt, um Kräfte bzw. resultierende Drehmomente vom Zwischengehäuse aus auf das Maschinengehäuse zu übertragen. Dies kann in konkreter Realisierung erfolgen, indem das Verbindungselement als Stift, Schraube oder Paßfeder ausgeführt ist, welche jeweils das Maschinengehäuse und das Zwischengehäuse, insbesondere dessen Lager-Deckel, in Achsrichtung durchsetzen.

Damit das genannte Lagersystem (Zwischengehäuse mit gegebenenfalls Lager-Deckeln, Loslager) gleichsam schwimmend vor allem in axialer Richtung im Maschinengehäuse aufgehängt werden kann, ist nach einer vorteilhaften Erfindungsweiterbildung ein Federelement vorgesehen, gegen dessen Kraft das Zwischengehäuse vorzugsweise axial verschiebbar angeordnet ist. In weiterer Konkretisierung dieses Gedankens ist dieses Federelement in einem Spalt zwischen dem Zwischengehäuse oder gegebenenfalls dessen Lager-Deckel einerseits und dem Maschinengehäuse andererseits angeordnet. Als Federelemente können z. B. an sich bekannte Kugellager-Ausgleichsscheiben oder auch radial auslenkbare Spiralfedern, deren Längsachse vorzugsweise senkrecht zur Läufer-Welle verläuft, verwendet werden.

Um beim Transport der erfindungsgemäß gelagerten elektrischen Maschine deren Funktionstüchtigkeit nicht zu beeinträchtigen, ist mit Vorteil eine Transport-Sicherungsschraube vorgesehen, die bei ihrer Betätigung das Zwischenlager und das Maschinengehäuse gegeneinander verstellt, insbesondere zueinander verschiebt; dies erfolgt zweckmäßig gegen die Kraft eines Federelementes, das zwischen dem Schraubkopf und dem Maschinengehäuse vorspannbar eingesetzt ist.

Der Vermeidung radialer Verspannungen dient es ferner, wenn nach einer Weiterbildung der Erfindung das Zwischengehäuse aus einem Material hergestellt ist, das einen den thermischen Verhältnissen angepaßten, insbesondere größeren Wärmeausdehnungskoeffizienten als das des Loslagers, im Falle von dessen Ausführung als Wälzlager des Außenlaufrings, aufweist. Durch eine unter diesem Gesichtspunkt geeignete Wahl des Werkstoffes für das Zwischengehäuse lassen sich Temperaturdifferenzen zwischen diesen und dem Loslager ausgleichen. Bei Ausführung des Zwischengehäuses als hohlzylindrischer bzw. ringförmiger Körper wird bei Erwärmung sowohl der Innen- als auch Außendurchmesser größer, so daß thermische Wanderbewegungen nur radial nach außen erfolgen. Bei Erwärmung wächst also in radialer Richtung das Zwischengehäuse schneller als das Loslager, insbesondere dessen Außenlaufring aufgrund der erfindungspezifischen Materialwahl mit jeweils unterschiedlichen Temperaturausdehnungskoeffizienten. Als Material haben sich Messing und/oder Grauguß als zweckmäßig erwiesen.

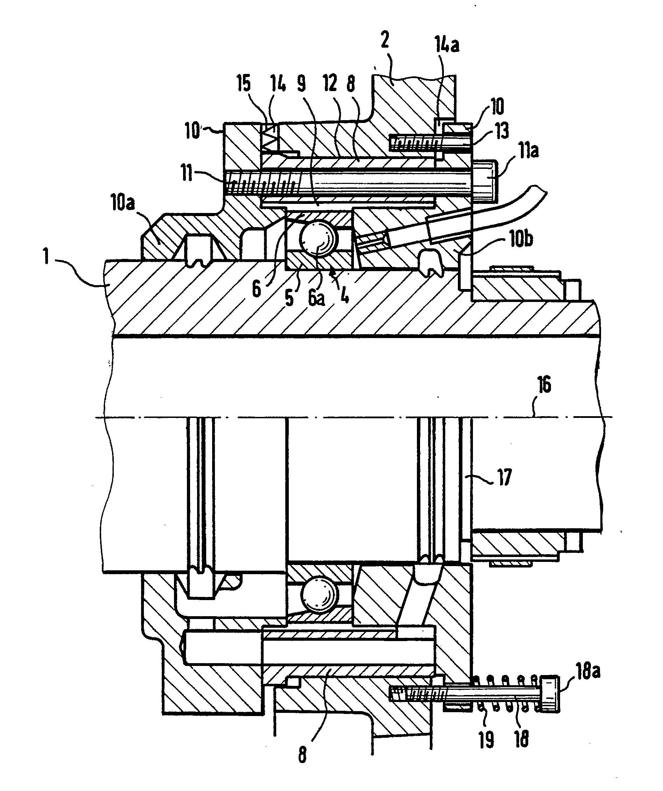

Weitere Einzelheiten, Merkmale und Vorteile der Erfindung ergeben sich aus der nachfolgenden Beschreibung eines bevorzugten Ausführungsbeispiels der Erfindung sowie anhand der Zeichnung, die im teilweisen axialen Längsschnitt eine vergrößerte Darstellung des Loslagers einer erfindungsgemäßen Fest-Los-Lagerung zeigt.

Bei einem Elektromotor ist in an sich bekannter Weise die Läuferwelle 1 in einem den Ständer aufweisenden Maschinengehäuse 2 an dessen einem nicht gezeigten Ende mittels eines Festlagers axial und radial festgelegt; am anderen entgegengesetzten Ende des Maschinengehäuses 2 ist die Läufer-Welle 1 über ein Loslager 4 axial verschiebbar geführt.

Wie vergrößert dargestellt, ist das Loslager 4 durch ein Wälz- bzw. Kugellager mit Innenlaufring 5, Außenlaufring 6 und dazwischen befindlicher Rollkugel 6a realisiert. Der Außenlaufring 6 begrenzt zusammen mit einem radial äußeren Zwischengehäuse 8 einen Auffangspalt 9, um etwaige radiale Aufweitungen des Außenlaufrings 6 aufgrund thermischer Einflüsse puffern zu können und radiale Verspannungen zu vermeiden. Zu seiner axialen Festlegung ist der Außenlaufring 6 an seinen Stirnseiten von je einem Lagerdeckel 10a, 10b im strammen Paßsitz eingeklemmt. Die Lagerdeckel 10 und das Zwischengehäuse 8 sind beispielsweise über die Schraubverbindung 11 miteinander befestigt. Hierzu steht das zugehörige Schraubelement 11a mit dem Innengewinde, die im Zwischengehäuse 8 und in den daran stirnseitig anliegenden Lagerdeckel 10 in einer gemeinsamen Flucht ausgebildet sind, in Eingriff. Das Zwischengehäuse 8 liegt von radial innen an einer Anlagefläche 12 des Maschinengehäuses 2 an. Zur Unterbindung von Relativbewegungen zwischen dem Maschinengehäuse 2 und dem Zwischengehäuse 8 in Umfangsrichtung der Läuferwelle 1 bzw. des Außenlaufrings 6 ist ein Verbindungsstift 13 vorgesehen, der den äußeren Lagerdeckel des Zwischengehäuses 8 und einen Teil des Maschinengehäuses 2 achsparallel durchsetzt. Der Verbindungsstift 13 dient also als Verbindungselement zur tangentialen Festlegung des Zwischengehäuses 8 mit dem Maschinengehäuse 2.

Das axiale Verstellspiel für thermische Ausgleichsbewegungen zwischen Läufer-Welle 1 und Maschinengehäuse 2 wird mittels eines Verschiebespaltes 14 und/oder eines axial versetzten weiteren Verschiebespaltes 14a ermöglicht, die vom Maschinengehäuse 2 einerseits und vom axial inneren bzw. äußeren Lager-Deckel 10a bzw. 10b andererseits begrenzt werden. Zu diesem Zweck ist der innere Lager-Deckel 10a - ebenso wie der axial äußere Lager-Deckel 10b mit dem Verbindungsstift 13 - gegenüber dem Außendurchmesser des Zwischengehäuses 8 radial erweitert bzw. nach außen vorspringend ausgeführt. In den inneren Verschiebespalt 14 ist ein Federelement 15 eingesetzt, so daß für die Läufer-Welle 1 in axialer Richtung eine "schwimmende" Lagerung erzielt wird. Im gezeichneten Beispiel ist das Federelement mittels einer schraubenlinienförmigen Feder realisiert, dessen Längsachse senkrecht zur Mittelachse 16 bzw. Läuferwelle 1 der elektrischen Maschine verläuft.

In der Zeichnung ist unterhalb der gestrichelt angedeuteten Mittelachse 16 die elektrische Maschine im Halbschnitt dargestellt, d. h. der zur Welle 1 gehörige Läufer 17 ist in Draufsicht erkennbar. Gemäß dem verbleibenden äußeren und geschnittenen Teil der unteren Zeichnungshälfte ist eine Transportsicherungsschraube 18 vorgesehen, deren Außengewinde mit den fluchtenden Innengewinden des äußeren Lagerdeckels 10b und des Maschinengehäuses 2 jeweils in Eingriff steht. Zwischen dem Schraubenkopf 18a der Sicherungsschraube 18 und der Außenseite des äußeren Lager-Deckels 10b ist noch eine Anpreßfeder 19 eingefügt, die zum Verschieben von Zwischengehäuse 8 und Maschinengehäuse 2 zueinander dient. Beim Betrieb des Elektromotors ist diese Transportsicherungsschraube 18 natürlich zu entfernen. Die Anordnung der Transportsicherungsschraube ist nicht auf das dargestellte Ausführungsbeispiel beschränkt. So ist es denkbar, diese baulich mit dem oben erläuterten Verbindungsstift 13 zu vereinen. Dabei muß allerdings, um das notwendige axiale Verstellspiel innerhalb des Verschiebungsspaltes 14 für den praktischen Motorbetrieb zu gewährleisten, eine Lösemöglichkeit für den Stift bzw. der Transportsicherungsschraube geschaffen werden, wodurch eine Belastung des Federelements 15 und/oder eine Verminderung des weiteren axialen Verschiebespaltes 14a vermieden ist.

**Patentansprüche**

1. Elektrische Maschine, insbesondere schnellaufender gekühlter Elektromotor mit Fest-Los-Lagerung (4), vor allem zum Ausgleich von Lager-Einbautoleranzen und/oder unterschiedlichen Wärmedehnungen von Läufer-Welle (1) und stationärem Ständer- bzw. Maschinengehäuse (2), gekennzeichnet durch ein das Loslager (4) umgebendes Zwischengehäuse (8), das relativ zum Maschinengehäuse (2) axial verschieblich (14, 14a) angeordnet ist.

2. Maschine nach Anspruch 1, dadurch gekennzeichnet, daß das Loslager (4), im Falle seiner Ausführung als Wälzlager, insbesondere dessen Außenlaufring (6), im Zwischengehäuse (8) axial festgelegt (10a, 10b) und/oder mit radialem Spiel (9) untergebracht ist.

3. Maschine nach Anspruch 1 oder 2, dadurch gekennzeichnet, daß das Zwischengehäuse (8) hohlzylindrisch und/oder ringförmig geformt ist.

4. Maschine nach einem der vorherigen Ansprüche, dadurch gekennzeichnet, daß das Zwischengehäuse (8) Fixierelemente (10) zur axialen Festlegung des Loslagers (4) aufweist.

5. Maschine nach Anspruch 3 und 4, dadurch gekennzeichnet, daß die Fixierelemente (10) als je an einer Stirnseite des Zwischengehäuses (8) angeschraubte Lager-Deckel (10a, 10b) ausgeführt sind, zwischen welchen das Loslager (4) eingeklemmt ist.

6. Maschine nach einem der vorherigen Ansprüche, gekennzeichnet durch ein Verbindungselement (13), mittels welchem das Zwischengehäuse (8) und das Maschinengehäuse zueinander tangential festgelegt und/oder gegeneinander unverdrehbar gekuppelt sind.

7. Maschine nach Anspruch 6, dadurch gekennzeichnet, daß das Verbindungselement (13) als Stift, Schraube oder Paßfeder ausgeführt ist, welche jeweils das Maschinengehäuse (2) und das Zwischengehäuse (8), vorzugsweise dessen Deckel (10b), achsparallel (16) durchsetzen.

8. Maschine nach einem der vorherigen Ansprüche, dadurch gekennzeichnet, daß das Zwischengehäuse (8) gegen die Kraft eines Federelementes (15), zum Beispiel einer Kugellager-Ausgleichsscheibe, verschieblich ist.

9. Maschine nach Anspruch 5 und 8, dadurch gekennzeichnet, daß das Federelement (15) in einem Spalt (14, 14a) zwischen dem Zwischengehäuse (8) oder gegebenenfalls dessen Lager-Deckel (10a) einerseits und dem Maschinengehäuse (2) andererseits angeordnet ist.

10. Maschine nach einem der vorherigen Ansprüche, gekennzeichnet durch eine das Zwischengehäuse (8) und das Maschinengehäuse (2) relativ zueinander - gegebenenfalls gegen die Kraft eines oder mehrerer Federelemente (15, 19) - axial verstellende Sicherungsschraube (18) für den Transport.

11. Maschine nach einem der vorherigen Ansprüche, dadurch gekennzeichnet, daß das Zwischengehäuse (8) aus einem Material mit den thermischen Verhältnissen angepaßter, insbesonderer größerer Wärmeausdehnung als das des Loslagers, bei dessen Ausführung als Wälzlager des Außenlaufrings (6), hergestellt ist.

12. Maschine nach Anspruch 11, gekennzeichnet durch Grauguß und/oder Messing als Material für das Zwischengehäuse.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 515 287 (BROWN, BOVERI & CIE AG)<br>* Seite 4, Zeilen 2-5,19-23,30-36; Figuren *<br>— — — | 1-4,8 | F 16 C 25/08<br>F 16 C 25/06<br>H 02 K 5/173<br>F 16 C 19/52 |
| Y | US-A-4 519 734 (MITCHELL et al.)<br>* Zusammenfassung; Figuren 2,3; Spalte 4, Zeilen 27-60 *<br>— — — | 1-4,8 | |
| A | PATENT ABSTRACTS OF JAPAN, Band 12, Nr. 160<br>(M-697)[3007], 14. Mai 1988;<br>& JP-A-62 278 311 (NACHI FUJIKOSHI CORP.) 03-12-1987<br>— — — | 1,3 | |
| A | EP-A-0 055 548 (RANSOME HOFFMANN POLLARD LTD)<br>* Figur 8; Seite 9, zeilen 16-21 *<br>— — — | 6,7 | |
| A | DE-A-2 121 612 (SIEMENS AG)<br>* Seite 2, Zeilen 6-21; Figur *<br>— — — | 8,9 | |
| A | US-A-4 730 995 (DEWHIRST)<br>* Figur *<br>— — — | 2 | |
| A | US-A-3 738 719 (LANGNER)<br>* Figuren 1,3,4; Spalte 3, Zeilen 5-10 *<br>— — — | 2 | RECHERCHIERTE SACHGEBIETE (Int. Cl.5) |
| A | DE-B-1 066 388 (S.K.F.)<br>* Spalte 3, Zeilen 56-66; Figur 3 *<br>— — — — — | 11 | F 16 C<br>H 02 K |

Der vorliegende Recherchenbericht wurde für alle Patentansprüche erstellt

| Recherchenort | Abschlußdatum der Recherche | Prüfer |
|---|---|---|
| Den Haag | 22 August 91 | GUTHMULLER J.A.H. |